# EUROPÄISCHE PATENTSCHRIFT

(11) **EP 1 637 748 B1**
(45) Veröffentlichungstag und Bekanntmachung des Hinweises auf die Patenterteilung: **19.12.2007**
(21) Anmeldenummer: 05020306.6
(22) Anmeldetag: 16.09.2005
(51) Int. Cl.: F16B 13/04

(54) **Befestigungselement für Steckverbindungen**
Fastening element for plug and socket connection
Elément de fixation pour connection enfichable

(30) Priorität: 17.09.2004 CH 15492004
(43) Veröffentlichungstag der Anmeldung: 22.03.2006
(73) Patentinhaber: MUNGO BEFESTIGUNGSTECHNIK AG, CH-4603 Olten (CH)
(72) Erfinder: Bappert, Adolf, 4616 Kappel (CH)
(74) Vertreter: Quehl, Horst Max

(56) Entgegenhaltungen:
- EP-A- 1 357 301
- DE-A1- 2 711 845
- DE-C- 920 781
- FR-A- 1 279 034
- US-A- 3 472 111
- US-A- 5 536 122

## Beschreibung

Die Erfindung betrifft ein Befestigungselement für Steckverbindungen entsprechend dem Oberbegriff des Patentanspruchs 1.

Ein Befestigungselement dieser Art ist bekannt durch die EP 1 357 301. Dieses hat für die Befestigung von Isolierplatten an einer Bauwerksoberfläche als Halteteil einen tellerförmigen Haltekopf, der über einen Halteschaft in einen Ankerschaft übergeht. Dieser ist zwischen zwei diametral einander gegenüberliegenden Spreizkörpern mit sägezahnartig hintereinander angeordneten Keilflächen eingeschlossen. Diese geben dem Ankerschaft einen größten Durchmesser, der wesentlich größer ist als derjenige der vorbereiteten Aufnahmebohrung, so dass beim Einschieben in die Aufnahmebohrung die Spreizkörper um ein entsprechendes Maß gegeneinander gedrückt werden. Da die Spreizkörper außerdem außen mit einer Eingriffsprofilierung versehen sind, steht der Einschiebebewegung in die Bohrung ein die Handhabung erschwerender Widerstand entgegen. Auch werden für die Herstellung der beiden Spreizschäfte in aufwändiger Weise zwei zusätzliche Formteile des Spritzgießwerkzeuges benötigt.

Weitere Befestigungselemente dieser Art sind an sich bekannt durch die US 5,536,122, die US 3,472,111 und die DE 2711845. Solche sind jedoch für Schwerlastbefestigungen mittels eines Gewindebolzens vorgesehen, so dass für die Verbindung nicht ein einfaches Einstecken in ein Aufnahmeloch ausreicht, sondern die Spannkraft des Gewindebolzens erforderlich ist.

Der Erfindung liegt die Aufgabe zugrunde, ein Befestigungselement zu finden, das einfacher und damit preisgünstiger herstellbar ist und das außerdem eine gute Verankerung in verschiedenartigem Material gewährleistet. Die Lösung dieser Aufgabe erfolgt erfindungsgemäß aufgrund der Merkmale des Patentanspruchs 1. Bevorzugte Ausführungsformen der Erfindung sind Gegenstand der abhängigen Patentansprüche und der folgenden Beschreibung anhand der Zeichnungen zu entnehmen. Es zeigt:
Fig.1 eine Seitenansicht eines erfindungsgemässen, für die Isolierplattenbefestigung bestimmten Befestigungselements, vor der Einrastung seines Spreizschaftes,
Fig.2 eine perspektivische Darstellung des Befestigungselements nach Fig.1,
Fig.3 einen Querschnitt durch den Spreizschaft des Befestigungselements nach Fig.1
Fig.4 einen in derselben axialen Position wie nach Fig.3 verlaufenden Querschnitt durch den Ankerschaft des Befestigungselements nach Fig.1,
Fig.5 bis Fig.7 Querschnitte durch das Befestigungselement an derselben axialen Position wie nach Fig.3 und Fig.4, jedoch mit verschiedenen axialen Positionen bzw. Spreizpositionen des Spreizschaftes relativ zum Ankerschaft entsprechend den Darstellungen in Fig.8 bis Fig.10, wobei Fig.7 die Position maximaler Spreizung darstellt,
Fig.8 bis Fig.10 Seitenansichten des den Spreizschaft aufweisenden Bereichs des Befestigungselements nach Fig.1 entsprechend den Spreizpositionen nach Fig.5 bis Fig.7,
Fig.11 eine perspektivische Darstellung eines erfindungsgemässen, als Isolierplattennagel ausgeführten Befestigungselements, mit einer Aufsicht auf seinen Haltekopf, vor dem Aufbringen einer Isoliermaterialrondelle,
Fig.12 eine perspektivische Darstellung des Befestigungselements nach Fig.11, mit einer Ansicht gegen die Unterseite seines Haltekopfes,
Fig.13 eine Seitenansicht eines Befestigungselementes entsprechend Fig.1, mit einer Aufsicht auf den Ankerschaft, vor Einrasten eines als separates Einzelteil hergestellten Spreizschaftes.
Fig.14 eine perspektivische Darstellung des Ankerschaftes nach Fig.1 oder Fig.2, nach Einrastung des Spreizschaftes und
Fig.15 und Fig.16 Querschnittsdarstellungen eines Befestigungselementes entsprechend den Darstellungen der Fig.5 und Fig.6, mit Varianten der Querschnittsform des Ankerschaftes,

Ein erfindungsgemäßes Befestigungselement 1 hat einen für die klemmende Verankerung in festem Wandmaterial ausgeführten Ankerschaft 2, einen für die Verankerung mit diesem zusammenwirkenden Spreizschaft 3 und einen Halteteil 4, durch den ein an der Wand zu befestigendes Objekt gehalten wird.

Bei der Ausführung eines erfindungsgemässen Befestigungselementes 1 als Isolierplattennagel ist der Halteteil 4 tellerförmig ausgeführt, um eine nichtdargestellte Isolierplatte an einer Wand zu halten und ist über einen Halteschaft 5 mit dem Ankerschaft 2 verbunden. Der Halteschaft 5 hat eine ausreichende Länge, um die durch die Isolierplatte geschaffene Distanz zwischen dem Halteteil 4 und der Bauwerksoberfläche zu überbrücken.

Für die Anwendung eines solchen Befestigungselementes 1 wird vorerst in einem Arbeitsgang eine abgestufte Aufnahmebohrung mittels eines Bohrwerkzeuges hergestellt, wie es in der eingangs genannten EP 1357301 beschrieben ist.

Für die klemmende Verankerung des Ankerschaftes 2 im Wandmaterial der Aufnahmebohrung sind an ihm in Schaftrichtung sägezahnartig hintereinander mehrere Keilflächen 6 bis 14 vorgesehen, die jeweils mit Keilgegenflächen 15 bis 23 des parallel zu diesem verlaufenden und relativ zu ihm axial verschiebbaren Spreizschaftes 3 in Kontakt stehen. Dieser gewährleistet durch seine Länge und seine im Folgenden beschriebene Ausgestaltung zusammen mit dem Ankerschaft 2 eine sichere Verankerung des Befestigungselementes 1 im Bereich des festen Wandmaterials , auch wenn dieses grössere Hohlkammern aufweist, wie sie z.B. an Hohlbausteinen anzutreffen sind.

Entsprechend einem in den Zeichnungen dargestellten Ausführungsbeispiel der Erfindung ist im wesentlichem Unterschied zum Stand der Technik entsprechend dem Ausführungsbeispiel der Fig. 21 der EP 1 357 301 ein durch Zugkräfte am Ankerschaft 2 radial aufspreizender Spreizschaft 3 nur an einer Seite des Ankerschaftes 2 vorgesehen, so dass seine diametral gegenüberliegende andere Seite im Wesentlichen profillos für den verspannenden Gleitkontakt an der Aufnahmebohrung bestimmt ist. Dadurch lässt sich das Befestigungselement leichter in eine vorbereitete Aufnahmebohrung einschieben. Auch steht auf diese Weise der Ankerschaft in grossflächigem und in Längsrichtung ununterbrochen, direkten Eingriffskontakt mit der Aufnahmebohrung.

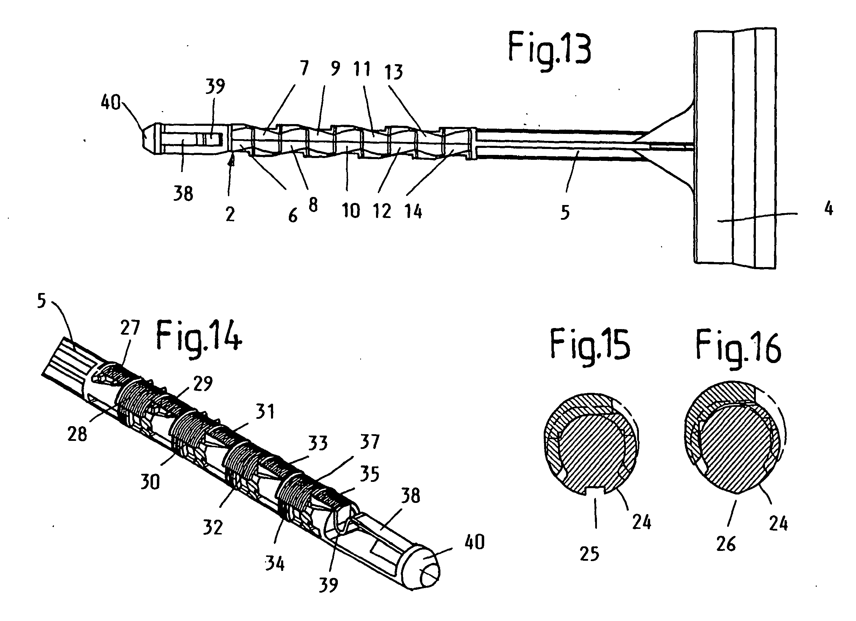

Die Art der kraftschlüssigen Einbettung bzw. die Grösse der Flächenpressung der im Wesentlichen glatten oder nur leicht querprofilierten Aussenfläche 24 des Ankerschaftes 2 in der Aufnahmebohrung kann durch Veränderung ihrer Querschnittform, abweichend von einem kreisbogenförmigen Querschnitt beeinflusst werden. Entsprechend dem Ausführungsbeispiel nach Fig.15 ist der Ankerschaft 2 an seiner Aussenseite mit einer Axialnut 25 versehen, während entsprechend dem Ausführungsbeispiel nach Fig.16 die Aussenseite des Ankerschaftes über die Kreisbogenform hinaus zu einer Scheitellinie 26 hin nach aussen gewölbt ist.

Um bei einer Beschränkung der Anordnung eines Spreizschaftes 3 auf nur eine Seite des Befestigungselementes bzw. der Beschränkung auf nur einen einseitig vorgesehenen Spreizschaft 3 eine Aufspreizung auf einem verhältnismässig grossen Umfangsbereich des Befestigungselementes 1 zu ermöglichen, umgreift der Spreizschaft 3 erfindungsgemäss den Ankerschaft 2 in einem Winkelbereich von mindestens 180° , wie es durch die Darstellungen der Fig. 4 bis Fig.7 veranschaulicht ist.

Eine solche Umgreifung kann jedoch, in nicht dargestellter Weise, auch für zwei äussere Spreizschäfte 3 vorgesehen sein, die einen somit mittigen Ankerschaft beidseitig, mit versetzten Spreizbereichen umfassen.

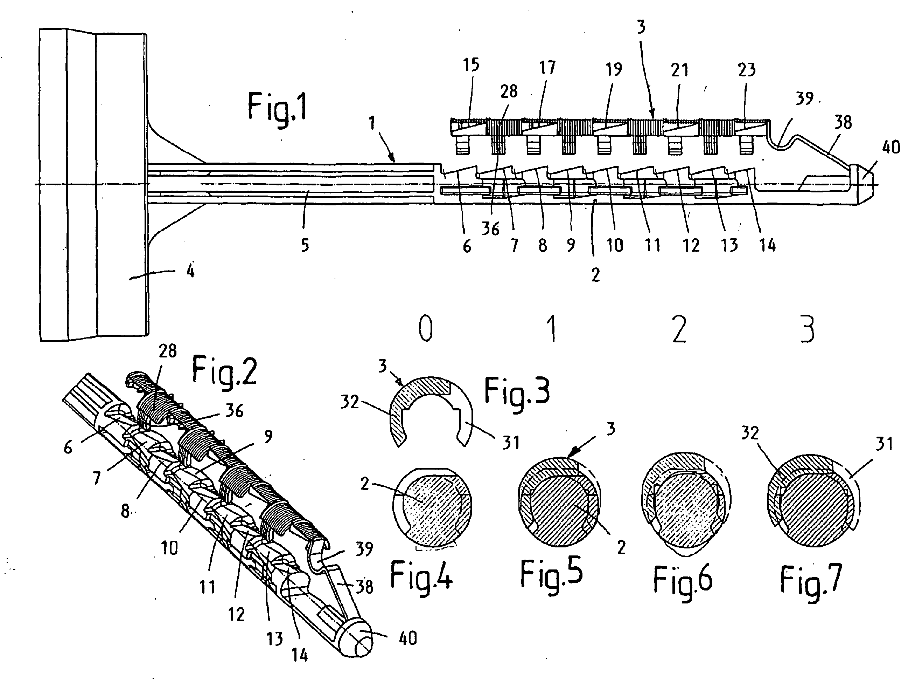

Um zu vermeiden, dass durch das Umgreifen des Ankerschaftes 2 der Spreizschaft 3 ein gesamthaft rinnenförmiges Profil entsprechend der Querschnittsform der Fig.3 resultiert, das durch eine solche Querschnittsform versteift wäre, hat der Spreizschaft 3 erfindungsgemäss beidseitig mit Abstand in axialer Richtung aufeinanderfolgende, innenseitig mindestens eine Keilfläche 15 bis 23 aufweisende Spreizbereiche 27, 29, 31, 33 und 35, die zu den in Umfangsrichtung gegenüberliegenden gleichartigen Spreizbereichen 28, 30, 32, 34 um diesen Abstand versetzt sind, so dass in axialer Richtung benachbarte Spreizbereiche jeweils gemeinsam den Ankerschaft 2 mit einem Winkel von mehr als 180° klauenartig umschliessen. Dabei können die Spreizbereiche 27 bis 35 jeweils eine in Umfangsrichtung des Befestigungselementes 1 abgestufte, axiale Breite aufweisen, so dass sie an ihrem in Umfangsrichtung äusseren Ende fingerartig einen schmaleren Aussenbereich 36 aufweisen.

Die Darstellungen der Fig.4 bis Fig.7 veranschaulichen die Aufspreizbewegungen aufgrund einer zwischen dem Ankerschaft 2 und dem Spreizschaft 3 relativ zueinander erfolgenden Axialverschiebung, wenn am Befestigungselement 1 Zugkräfte auftreten, die bestrebt sind, dieses aus der Aufnahmebohrung herauszuziehen. Dabei wird der Spreizschaft 3 durch seine Haftung in der Aufnahmebohrung zurückgehalten, während der Ankerschaft 2 sich gegenüber dem Spreizschaft 3 verschiebt.

Vor der Einleitung von eine Verspannung bewirkenden Zugkräften am Befestigungselement 1 kann eine anfängliche Verspannung zwischen dem Ankerschaft 2 und dem Spreizschaft 3 durch eine beide verbindende, z.B. am vorderen Ende 40 des Befestigungselementes 1 angeformte Verbindungslasche 38 unterstützt werden, indem diese eine in axialer Richtung des Befestigungselementes 1 elastisch verformbare Auskröpfung 39 aufweist.

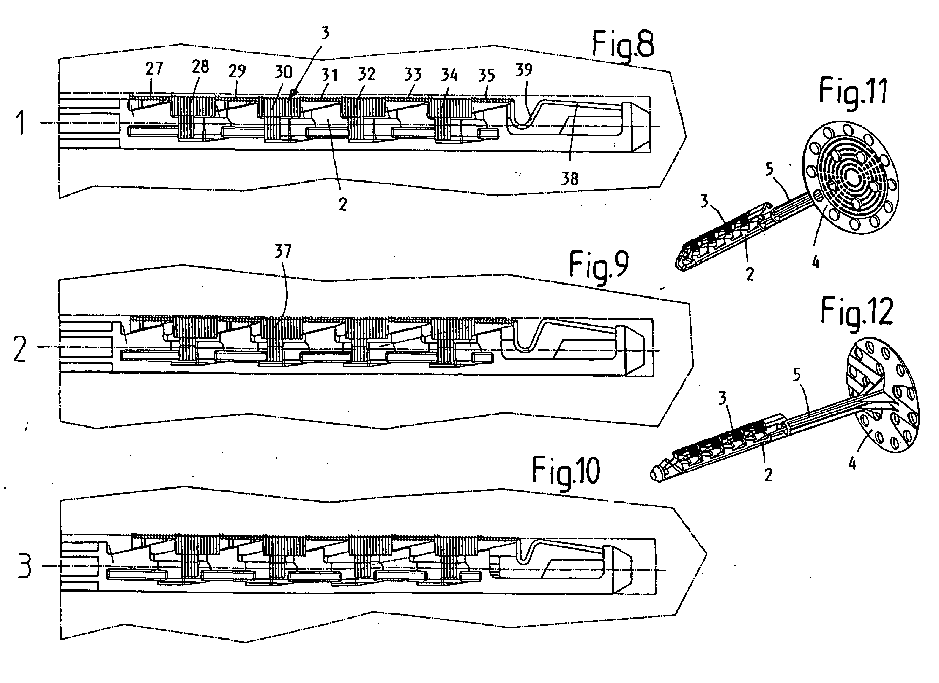

Die Fig. 8 bis Fig.10 zeigen drei von dabei aufeinander folgenden Relativpositionen, die mit den Ziffern 1 bis 3 bezeichnet sind. Die Fig.5 bis Fig.7 zeigen im Radialschnitt die zugehörigen Spreizpositionen am Beispiel von zwei axial benachbarten Spreizbereichen 31,32.

Die miteinander in Kontakt befindlichen Keilflächen 6 bis 14 und 15 bis 23 des Ankerschaftes 2 und des Spreizschaftes 3 sind erfindungsgemäss in Umfangsrichtung des Befestigungselementes 1 gekrümmt oder verlaufen in flachem Winkel zueinander. Auch können die sägezahnartig in axialer Richtung aufeinander folgenden Keilflächen 6 bis 14 zumindest des Ankerschaftes 3 zu einer Symmetrieebene des Ankerschaftes 2 in abwechselnd entgegengesetzter Richtung schräg verlaufen, wie es die Darstellung der Fig. 13 veranschaulicht, so dass sich an den Spreizbereichen 27 bis 35 entsprechend schräg nach aussen gerichtete Spreizkräfte ergeben.

Vorzugsweise hat die an der Aufnahmebohrung zur Anlage kommende Aussenfläche der Spreizbereiche 27 bis 35 eine insbesondere die Anfangshaftung sowie den Spreizeingriff verbessernde, z.B. aus zahlreichen in Umfangsrichtung des Befestigungselementes 1 verlaufenden Rippen bestehende Feinprofilierung.

Die Herstellung eines erfindungsgemässen Befestigungselementes 1 kann zusammen mit dem relativ zum Ankerschaft 2 verschiebbaren Spreizschaft 3 in Spritzgiesstechnik in einem Stück erfolgen, indem der Spreizschaft 3 in vom Ankerschaft 3 gelöster bzw. abgespreizter Position z.B. entsprechend den Darstellungen der Fig.1 und Fig.2 in einem separaten Formteil ausgebildet wird. Der Spreizschaft 3 kann jedoch auch getrennt und ausserdem mit einer anderen Farbe des Kunststoffmaterials hergestellt werden, um anschliessend mit dem Ankerschaft 2 verrastet zu werden. Auch bei solchem Ausführungsbeispiel kann an einem Ende des Spreizschaftes 3 eine in axialer Richtung elastisch verformbare Lasche angeordnet werden, die ähnlich geformt ist wie die Verbindungslasche 38 des dargestellten Ausführungsbeispieles.

Ein erfindungsgemässes Befestigungselement kann in Anpassung an verschiedenen Anwendungsarten verschiedenartig gestaltete Halteteile aufweisen, wie z.B. einen Gewindezapfen, auf den verschiedenartige, mit einem Innengewinde versehene Objekte aufgeschraubt werden können oder eine Schraubenmutter zur Befestigung von Objekten. Auch kann er die Form eines Hakens oder anderer, an sich bekannter Eingriffsmittel für die Halterung eines Objektes aufweisen. Schliesslich kann der Halteteil auch gleichartig ausgeführt sein wie der Ankerschaft 2 mit seinem zugehörigen Spreizschaft 3, um ein eine dazu passende Aufnahmebohrung aufweisendes Objekt auf das Befestigungselement auf- oder anzustecken, so dass das Befestigungselement 1 die Aufgabe eines Verbindungselementes erfüllt.

## Patentansprüche

1. Befestigungselement für Steckverbindungen, mit einem Halteteil (4) für ein zu befestigendes Objekt und mit einem für die Aufnahme in einer Bohrung bestimmten Ankerschaft (2), an dem in Schaftrichtung sägezahnartig hintereinander mehrere Keilflächen (6-14) vorgesehen sind, die mit Keilgegenflächen (15-23) eines parallel zu diesem verlaufenden und relativ zu diesem axial verschiebbaren Spreizschaftes (3) in Kontakt stehen, **dadurch gekennzeichnet, dass** die miteinander in Kontakt befindlichen Keilflächen (6-23) des Ankerschaftes (2) und des Spreizschaftes (3) in Umfangsrichtung des Befestigungselements (1) gekrümmt oder im Winkel zueinander verlaufen und der Spreizschaft (3) auf beiden Seiten seiner Längsachse jeweils mit Abstand in axialer Richtung aufeinander folgende, innenseitig mindestens eine der Keilflächen aufweisende Spreizbereiche (27,29,31,33,35 und 28,30,32,34) aufweist , wobei axial benachbarte Spreizbereiche (27 - 35) in Umfangsrichtung zueinander derart querversetzt sind, dass sie gemeinsam den Ankerschaft (2) mit einem Winkel von mehr als 180° klauenartig umschließen.

2. Befestigungselement nach Anspruch 1, **dadurch gekennzeichnet, dass** die dem Spreizschaft (3) abgekehrte Seite des Ankerschaftes (2) für den verspannenden Gleitkontakt an der Aufnahmebohrung bestimmt ist.

3. Befestigungselement nach Anspruch1, **dadurch gekennzeichnet, dass** die sägezahnartig in axialer Richtung aufeinander folgenden Keilflächen des Ankerschaftes (6-14) zu einer Symmetrieebene des Ankerschaftes (2) abwechselnd in entgegengesetzter Richtung schräg verlaufen (Fig.13).

4. Befestigungselement nach Anspruch1, **dadurch gekennzeichnet, dass** die Spreizbereiche (27-35) jeweils eine in Umfangsrichtung des Befestigungselementes (1) abgestufte oder abnehmende axiale Breite aufweisen, so dass sie in Umfangsrichtung einen schmaleren Außenbereich (36) aufweisen.

5. Befestigungselement nach einem der Ansprüche 1 bis 4, **dadurch gekennzeichnet, dass** der Spreizschaft (3) im Bereich des dem Halteteil (4) gegenüberliegenden vorderen Dübelendes (40) über eine gekrümmte, flexible Lasche (38) mit dem Ankerschaft (2) einstückig verbunden ist, so dass er gegenüber diesem axial verschiebbar ist.

6. Befestigungselement nach Anspruch 2, **dadurch gekennzeichnet, dass** der Ankerschaft (2) an seiner Außenseite mit einer Axialnut (25) versehen ist.

7. Befestigungselement nach Anspruch 2, **dadurch gekennzeichnet, dass** der Ankerschaft (2) an seiner Außenseite über die Kreisbogenform hinaus zu einer Scheitellinie (26) hin nach außen gewölbt ist.

8. Befestigungselement nach Anspruch 2, 6 oder 7, **dadurch gekennzeichnet, dass** der Ankerschaft (2) an seiner Außenseite eine glatte, das Einschieben in eine Aufnahmebohrung begünstigende Oberfläche hat und die Oberfläche der Außenseite des Spreizschaftes (3) eine die Haftung in der Aufnahmebohrung begünstigende Querprofilierung aufweist.

9. Befestigungselement nach einem der Ansprüche 1 bis 8, **dadurch gekennzeichnet, dass** der Halteteil (4) über einen spreizmittelfreien Halteschaft (5) mit dem Ankerschaft (2) verbunden ist und für eine lsolierplattenbefestigung tellerförmig als Träger einer Isolierstoffrondelle ausgebildet ist.

10. Befestigungselement nach einem der Ansprüche 1 bis 9, **dadurch gekennzeichnet, dass** der Halteschaft (5) und der Ankerschaft (2) aus Kunststoff geformt sind.

## Claims

1. Fastener for plug connections with a holding part (4) for an object to be fixed and with an anchor shank (2), determined for the receiving in a bore, on which several sawtooth-shaped lobes (6-14) are provided one after another in the shaft direction, which remain in contact with counter lobes (15-23) of an expanding shaft (3) running parallel to this and axially shifted relative to this, **characterised by** the fact that the lobes (6-23) of the anchor shank (2) and the expanding shaft (3), which are in contact with each other, run curved or at an angle to each other in the peripheral direction of the fastener (1) and the expanding shaft (3) has on both sides of its longitudinal axis minimum one of the expanding areas (27,29,31,33,35 and 28,30,32,34) having the lobes in the inner side following each other in axial direction respectively with interval distances where axially adjacent expanding areas (27 - 35) are staggered crosswise to each other in the peripheral direction in such a way that they all together surround the anchor shank (2) claw-like with an angle of more than 180°.

2. Fastener according to claim 1**characterised by** the fact that
the side of the anchor shank (2) turned away from the expanding shaft (3) is determined for the clamping sliding contact to the seating hole.

3. Fastener according to claim 1 **characterised by** the fact that the sawtooth-type lobes of the anchor shank (6-14) following each other in the axial direction run inclined to a plane of symmetry of the anchor shank (2) alternately in an opposite direction (Fig.13).

4. Fastener according to claim 1**characterised by** the fact that the expanding areas (27-35) have respectively a stepped or decreasing axial width in the peripheral direction of the fastener (1) so that they have a smaller external area (36) in the peripheral direction.

5. Fastener according to one of the claims 1 to 4 **characterised by** the fact that the expanding shaft (3) is connected to the anchor shank (2) in one piece in the area of the front plug end (40) lying opposite to the holding part (4) via a curved, flexible link (38) so that it can be moved axially opposite to this.

6. Fastener according to claim 2 **characterised by** the fact that the anchor shank (2) is provided with an axial groove (25) on its outer side.

7. Fastener according to claim 2 **characterised by** the fact that the anchor shank (2) is curved towards the outside at its outer side beyond the form of an arc of a circle to an apex line (26).

8. Fastener according to claim 2, 6 or 7 **characterised by** the fact that the anchor shank (2) has on its outer side a smooth surface favourable for the insertion into a seating hole and the surface of the outer side of the expanding shaft (3) has a cross profiling favourable for the gripping in the seating hole.

9. Fastener according to one of the claims 1 to 8 **characterised by** the fact that the holding part (4) is connected to the anchor shank (2) via an expanding-material-free holding shaft (5) and is formed disc-shaped as support for a circular insulation bed for an insulation board fixing.

10. Fastener according to one of the claims 1 to 9 **characterised by** the fact that the holding shaft (5) and the anchor shank (2) are made of plastic.

## Revendications

1. Elément de fixation pour des liaisons enfichables, comprenant une pièce de maintien (4) pour un objet à fixer et comprenant une tige d'ancrage (2) destinée au logement dans un perçage, sur laquelle plusieurs surfaces cunéiformes (6 - 14) sont prévues l'une derrière l'autre à la manière de dents de scie dans la direction de tige, lesquelles sont en contact avec des contre-surfaces aux surfaces cunéiformes (15 - 23) d'une tige à expansion (3) s'étendant parallèlement à celle-ci et étant déplaçable axialement par rapport à celle-ci, **caractérisé en ce que** les surfaces cunéiformes (6 - 23) de la tige d'ancrage (2) et de la tige à expansion (3), se trouvant en contact les unes avec les autres, sont courbées dans la direction circonférentielle de l'élément de fixation (1) ou s'étendent en angle l'une par rapport à l'autre et **en ce que** la tige à expansion (3) présente sur deux côtés de son axe longitudinal, respectivement à distance en direction axiale, des zones à expansion (27, 29, 31, 33, 35 et 28, 30, 32, 34) se suivant consécutivement les unes aux autres et présentant sur le côté intérieur au moins une des surfaces cunéiformes, sachant que des zones à expansion (27 - 35) axialement adjacentes sont décalées transversalement dans la direction circonférentielle l'une par rapport à l'autre de telle sorte qu'elles coiffent en communauté la tige d'ancrage (2) à la manière d'une griffe sous un angle supérieur à 180°.

2. Elément de fixation selon la revendication 1, **caractérisé en ce que** le côté de la tige d'ancrage (2), détourné de la tige à expansion (3), est destiné au contact à glissement avec déformation sur le perçage de réception.

3. Elément de fixation selon la revendication 1, **caractérisé en ce que** les surfaces cunéiformes de la tige d'ancrage (6 - 14) se suivant consécutivement les unes aux autres à la manière de dents de scie en direction axiale s'étendent à l'oblique, en alternance dans la direction opposée, par rapport à un plan de symétrie de la tige d'ancrage (2) (figure 13).

4. Elément de fixation selon la revendication 1, **caractérisé en ce que** les zones à expansion (27 - 35) présentent respectivement une largeur axiale qui diminue ou qui est échelonnée dans la direction circonférentielle de l'élément de fixation (1), de telle sorte qu'elles présentent une zone extérieure plus étroite (36) dans la direction circonférentielle.

5. Elément de fixation selon l'une des revendications 1 à 4, **caractérisé en ce que** la tige à expansion (3) est reliée en un seul tenant avec la tige d'ancrage (2) dans la zone de l'extrémité de cheville avant (40), laquelle se trouve à l'opposé de la pièce de maintien (4), par l'intermédiaire d'une bride courbée et flexible (38), de telle sorte qu'elle peut être déplacée axialement par rapport à ladite tige d'ancrage.

6. Elément de fixation selon la revendication 2, **caractérisé en ce. que** la tige d'ancrage (2) est munie sur son côté extérieur d'une rainure axiale (25).

7. Elément de fixation selon la revendication 2, **caractérisé en ce que** la tige d'ancrage (2) est cintrée vers l'extérieur sur son côté extérieur, au-delà de la forme d'arc de cercle pour former une ligne de sommet (26).

8. Elément de fixation selon la revendication 2, 6 ou 7, **caractérisé en ce que** la tige d'ancrage (2) a sur son côté extérieur une surface lisse qui favorise l'insertion dans un perçage de réception et **en ce que** la surface du côté extérieur de la tige à expansion (3) présente un profilage transversal qui favorise l'adhérence dans le perçage de réception.

9. Elément de fixation selon l'une des revendications 1 à 8, **caractérisé en ce que** la pièce de maintien (4) est reliée à la tige d'ancrage (2) par l'intermédiaire d'une tige de maintien (5) exempte de moyens à expansion et **en ce qu'**elle est réalisée en forme de plateau pour une fixation de panneau isolant comme support d'une rondelle en matériau isolant.

10. Elément de fixation selon l'une des revendications 1 à 9, **caractérisé en ce que** la tige de maintien (5) et la tige d'ancrage (2) sont moulées à partir de matière plastique.
